(19) Europäisches Patentamt
European Patent Office
Office européen des brevets

(11) Numéro de publication : **0 263 850 B1**

(12) **FASCICULE DE BREVET EUROPEEN**

(45) Date de publication du fascicule du brevet :
**12.06.91 Bulletin 91/24**

(51) Int. Cl.⁵ : **B29C 47/00, B29C 47/12**

(21) Numéro de dépôt : **87902109.5**

(22) Date de dépôt : **27.03.87**

(86) Numéro de dépôt international :
**PCT/FR87/00097**

(87) Numéro de publication internationale :
**WO 87/06181 22.10.87 Gazette 87/23**

(54) **DISPOSITIF DE FABRICATION EN CONTINU PAR EXTRUSION D'UNE PAROI ALVEOLAIRE TRIDIMENSIONNELLE, PAROI ALVEOLAIRE EN RESULTANT.**

(30) Priorité : **11.04.86 FR 8605216**

(43) Date de publication de la demande :
**20.04.88 Bulletin 88/16**

(45) Mention de la délivrance du brevet :
**12.06.91 Bulletin 91/24**

(84) Etats contractants désignés :
**AT BE CH DE FR GB IT LI LU NL SE**

(56) Documents cités :
**DE-A- 2 527 787**
**DE-B- 1 215 917**

(56) Documents cités :
**DE-C- 159 971**
**FR-A- 1 555 590**
**US-A- 3 247 039**
**US-A- 3 932 090**

(73) Titulaire : **TROTIGNON, Jean-Pierre**
**13 La Roseraie 114, avenue de Paris**
**F-78000 Versailles (FR)**

(72) Inventeur : **TROTIGNON, Jean-Pierre**
**13 La Roseraie 114, avenue de Paris**
**F-78000 Versailles (FR)**

(74) Mandataire : **Robert, Jean-Pierre et al**
**CABINET BOETTCHER 23, rue la Boétie**
**F-75008 Paris (FR)**

## Description

Les structures alvéolaires dont certaines sont en nid d'abeille sont principalement utilisées comme noyau ou âme dans la fabrication de panneaux, ou parois planes, de forme, ou tubulaires...

Une telle structure, emprisonnée entre deux plaques minces et dures, formant les façades de la paroi présente une excellente rigidité sous un faible poids.

Il existe plusieurs principes de fabrication d'un matériau alvéolaire en nid d'abeille. L'un d'eux consiste à coller les unes sur les autres une pluralité de feuilles minces le long de lignes en quinconce d'une feuille à l'autre puis à déployer l'empilage par traction perpendiculaire au plan des plaques. Le corps ainsi obtenu par la mise en volume de cet empilage présente de nombreux canaux tubulaires paralléles. Un tronçonnage approprié, perpendiculaire à la direction longitudinale des canaux, permet d'obtenir des plaques, à l'épaisseur voulue que l'on peut ensuite utiliser en tant qu'âme de panneau, en les recouvrant sur chacune de leurs faces dressées par tronçonnage, d'une feuille de parement. Ce mode de fabrication par déformation est utilisé pour réaliser des nids d'abeille a partir de feuilles métalliques ou de matière plastique.

Dans le cas exclusif de la matière plastique, le corps alvéolaire peut être obtenu par extrusion au travers d'une filière constituée par une paroi dans laquelle les ouvertures sont les intervalles existant entre des noyaux fixes. La matière qui est poussée s'écoule dans les interstices et sort de la filière sous forme d'un réseau tubulaire parallèle où il est immédiatement refroidi et durci pour conserver sa forme. Le refroidissement est généralement réalisé par une circulation d'eau dans le réseau tubulaire à partir de canalisations débouchant sur la face de sortie des noyaux. La section du réseau tubulaire ainsi formé est nécessairement réduite du fait des limites du plan de la filière et de la complexité même de cette filière (voir le document FR-A-2.493.219). Il s'ensuit que les plaques obtenues par tronçonnage de ce faisceau tubulaire, sont de petites dimensions. Il est alors nécessaire de les assembler côte à côte par collage ou soudage pour leur utilisation ultérieure en tant qu'âme d'un panneau.

Dans les deux cas, les multiples parois de la structure alvéolaire sont perpendiculaires aux plaques de peau qui lui sont rapportées. L'ensemble du panneau ainsi constitué possède une bonne résistance à la compression, surtout perpendiculairement à ses faces et à la flexion.

En revanche, au cisaillement le comportement de ces panneaux est médiocre, les parois de la structure alvéolaire pouvant facilement être couchées.

Les modes de fabrication d'une structure alvéolaire jusqu'ici connus ne permettent pas une production de masse en continu donc à faible prix de revient.

Il y a en effet toujours l'obligation de reprendre le produit extrudé pour placer les cellules du produit fini dans une orientation perpendiculaire à celle dans laquelle elles sont extrudées.

Dans le document US-A-3 932 090 il a été proposé d'extruder une grande variété de produits ayant trois dimensions, en faisant varier la forme de l'orifice de sortie de l'extrudeur. On remarque que l'une des manières de faire varier cet orifice réside dans le fait de déplacer devant une ouverture fixe, un masque qui n'en révèle à chaque instant qu'une partie. Ce document ne concerne cependant pas une paroi alvéolaire et méconnaît les contraintes de l'extrusion qui veulent que le débit de sortie du produit soit constant.

L'extrusion d'un réseau de cellules ou d'alvéoles dont l'axe est perpendiculaire à la direction d'extrusion est le problème que l'invention permet de résoudre.

La solution selon l'invention réside dans un dispositif d'extrusion qui comporte au moins un élément coulissant par rapport à un autre élément le long d'une surface plane sécante de la direction de sortie du produit, selon un mouvement périodique, l'un des éléments étant constitué par une filière pourvue d'une ouverture de passage du produit, l'autre élément étant un masque pourvu d'une fenêtre découvrant partiellement ladite ouverture entre ses deux bords opposés les plus proches.

Ce dispositif pour l'extrusion d'une paroi alvéolaire, dans laquelle chaque alvéole est de hauteur sensiblement perpendiculaire à la direction de sortie du produit, est tel que l'ouverture de passage du produit comporte au moins une fente en forme de ligne brisée dont la largeur définit l'épaisseur des cloisons limitant les alvéoles, l'écartement des bords les plus proches de la fenêtre définit la hauteur des alvéoles, et l'amplitude du mouvement périodique est au moins égale à la différence entre la distance séparant les bords de la fenêtre et la largeur de la ligne brisée mesurée entre ses sommets opposés.

Dans une réalisation préférée de l'invention, l'ouverture de sortie comporte des segments de fente, sensiblement parallèles, implantés à chacun des sommets de la fente en ligne brisée.

Pour la réalisation des plaques la fenêtre susdite est sensiblement rectangulaire et le mouvement périodique du masque est un coulissement alternatif perpendiculaire aux grands côtés de la fenêtre. Si le rectangle est curviligne, au moins en ce qui concerne ses grands côtés, la paroi obtenue sera cintrée, par exemple en portion cylindrique.

Pour la réalisation de tubes, la fenêtre susdite est annulaire et le mouvement périodique est un coulissement rotatif excentré du masque autour de l'axe de symétrie de l'ouverture de la filière.

La forme de la fenêtre n'est pas limitée. Elle peut constituer une ondulation ou une succession de différentes sections (trapèzes, omégas,...) permettant d'obtenir des parois de tout profil.

Afin de pouvoir régler au moins certaines des dimensions des alvéoles, pour un débit d'extrusion donné, la vitesse de coulissement alternatif du masque est réglable.

En outre, pour obtenir des plaques d'épaisseurs différentes, ou une plaque d'épaisseur variable, le masque susdit est en deux parties, écartées l'une de l'autre pour délimiter entre elles la fenêtre, d'une distance réglable.

Le dispositif selon l'invention comporte en outre divers moyens pour assurer un débit d'extrusion constant quelles que soient les dimensions de paroi à réaliser ou les épaisseurs des cloisons des alvéoles que l'on veut obtenir. Aussi, la paroi comporte un orifice de trop plein dont la section est plus au moins occultée en fonction de la largeur de ladite fenêtre.

Avantageusement, l'occultation peut être réalisée par une partie du masque possédant à cet effet une ouverture de section variable disposée en regard dudit orifice pour maintenir constant le débit global d'extrusion.

Si les épaisseurs de cloison de chaque alvéole ne sont pas à priori essentielles en tant que caractéristique du produit, on peut assurer un débit constant de la filière en prévoyant que, pour une fenêtre de dimensions données, la somme des sections de passage du produit inscrites dans les limites de la fenêtre est constante, quelle que soit la position de la fenêtre au cours de son déplacement.

Dans le cas contraire, où il existe une contrainte d'épaisseur à respecter pour les cloisons susdites, on peut assurer le maintien constant du débit lors du déplacement du masque par au moins un orifice de compensation de débit ménagé dans la paroi, dont la section est variable avec une loi inverse de celle de variation de la somme des sections de passage du produit inscrites dans la fenêtre au cours du déplacement du masque.

Le dispositif selon l'invention peut également comporter dans la paroi de filière un orifice distinct des fentes, disposé de manière à rester inscrit dans la fenêtre quelle que soit la position du masque.

Il peut également comporter des filières secondaires dont les orifices de sortie du produit sont constitués par deux fentes parallèles entre elles ménagées dans le masque de part et d'autre de la fenêtre en correspondance permanente avec un orifice fixe de la paroi et associées chacune à un rouleau de placage à l'état encore pâteux de chacune des plaques issus des fentes, sur les surfaces supérieure et inférieure de la paroi alvéolaire susdite.

Un second objet de l'invention consiste en une paroi alvéolaire produite par extrusion au travers d'une filière d'un matériau pâteux et solidification au delà de la filière, dans laquelle chaque alvéole étant délimité par une pluralité de cloisons sensiblement transversales à l'épaisseur de la plaque, au moins deux des cloisons susdites sont inclinées à la fois par rapport à une direction normale aux faces de la paroi et par rapport à la direction d'extrusion. La paroi peut être plane, incurvée, de surface quelconque réglée selon le sens de l'extrusion, ou tubulaire.

L'invention sera mieux comprise au cours de la description donnée ci-après a titre d'exemple purement indicatif et non limitatif qui permettra d'en dégager les avantages et les caractéristiques secondaires.

Il sera fait référence aux dessins annexés dans lesquels :

– la figure 1A, 1B et 1C sont des vues frontales schématiques de trois réalisations possibles du dispositif selon l'invention,

– la figure 2 est une vue schématique de l'ensemble d'un dispositif de l'invention, en coupe selon la ligne II-II de la figure 1B,

– la figure 3 illustre par une vue schématique semblable à celle de la figure 2 une variante de réalisation de l'invention permettant la coextrusion de deux plaques de parement de la structure alvéolaire,

– la figure 4 illustre par un schéma une variante de réalisation du dispositif selon l'invention possédant des moyens de réglage de l'épaisseur du produit extrudé,

– La figure 5 illustre schématiquement une autre variante du dispositif selon l'invention,

– la figure 6 est une vue frontale partielle d'un nez de filière permettant l'extrusion d'une structure alvéolaire avec un cloisonnement longitudinal,

– la figure 7 est une vue partielle en perspective d'un produit à structure alvéolaire en forme de plaque conforme à l'invention.

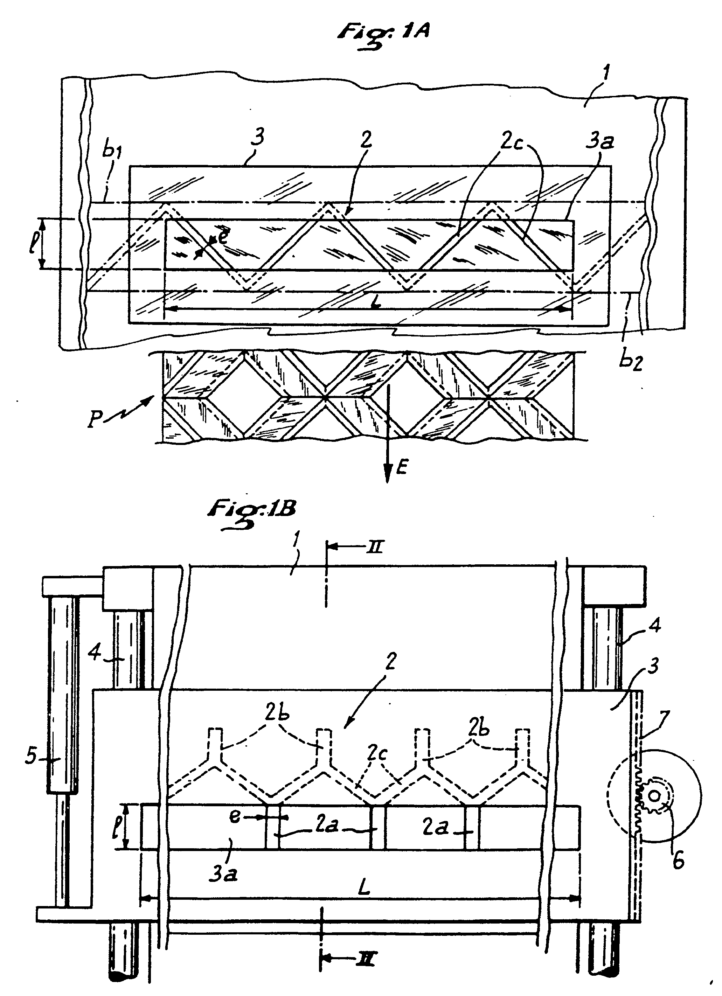

En se reportant tout d'abord aux figures 1A et 1B, on voit de face une plaque 1 formant la filière d'une extrudeuse et pourvue à cet effet d'une ouverture de passage du produit dont la section perpendiculaire au sens d'avancement du produit est référencée 2.

Dans le cas de la figure 1A, cette section 2 est constituée par une fente en forme de ligne brisée, constituée donc de tronçons successifs obliques 2c de fente définissant entre eux des sommets inférieurs et supérieurs.

Dans le cas de la figure 1B, cette section 2 est constituée par une pluralité de fentes inférieures 2a parallèles et une pluralité de fentes supérieures 2b également parallèles et décalées dans le sens horizontal par rapport aux fentes 2a. Mis à part les fentes d'extrémités chacune des fentes inférieures est reliée par des fentes obliques 2c aux deux fentes supérieures qui l'encadrent. Il en est de même pour les fentes supérieures et leur liaison avec les fentes inférieures.

On peut, sans sortir du cadre de l'invention, imaginer d'autres formes de section de l'orifice de la filière, celui représenté n'étant qu'un exemple non limitatif. C'est ainsi qu'il est possible de réaliser une ouverture dont le dessin de la section peut former une frise de lignes brisées entrecroisées dont chacun des segments qui la constitue peut être curviligne ou rectiligne. Bien entendu la plaque 1 de filière pourra être en plusieurs pièces assemblées et juxtaposées pour réaliser de manière simple l'ouverture d'extrusion. Dans le cas particulier où une portion de paroi se trouve entièrement bordée par une ouverture du fait du dessin de la section de passage du produit, cette portion peut être maintenue en place par rapport aux autres parties de la paroi qui lui sont adjacentes par tout moyen connu tel que de fines entretoises s'étendant dans la section de passage du produit, ou par le fait que ce noyau est, à l'intérieur de la filière, solidaire d'un support lui-même solidaire de la filière dans une zone ne gênant pas la circulation du produit. On notera que quel que soit le dessin de la section de passage du produit, aucune des portions de cette section n'est isolée des autres de manière que la surface de la section complète n'offre aucune solution de continuité.

Devant la filière 1, le dispositif comporte un masque 3 susceptible de coulisser le long de la face frontale de cette filière, en étant guidé dans ce coulissement le long de colonnes 4. On a représenté en 5 un vérin permettant d'entraîner dans un mouvement de va et vient, de course déterminée et réglable, le masque 3 le long des colonnes 4. En variante, et en alternative au vérin 5, cet entraînement peut être assuré par un dispositif 6 de roue motrice dentée coopérant avec une crémaillère 7 solidaire du masque 3.

On n'a pas représenté sur ces figures les moyens permettant d'appliquer le masque (rouleaux ou galets presseurs par exemple) contre la face frontale de la filière sur laquelle il coulisse, de manière à assurer l'étanchéité du contact masque-filière.

Le masque 3 est pourvu d'une fenêtre rectangulaire 3a de longueur L et de hauteur l. L'ouverture 2 de sortie de la filière est ainsi partiellement occultée par le masque 3 qui ne laissera passer le produit qu'au travers de la fenêtre 3a.

Il faut noter que la dimension l de la fenêtre, qui sépare ses bords opposés des plus rapprochés, est nettement supérieure à la largeur e des fentes découvertes. Cette caractéristique permet d'extruder des cloisons d'épaisseur e et de hauteur l, à condition que le produit soit extrudé dans une direction parallèle à une droite, par exemple perpendiculaire à la filière, ce qui donne le caractère tridimensionnel à la paroi.

La figure 1A montre partiellement par une vue en plan le produit P issu du dispositif d'extrusion vu de face sur cette figure.

Dans une opération d'extrusion le masque est animé d'un mouvement continu alternatif de translation devant la paroi de filière, concommitamment à la sortie du produit. On comprend alors que la section de passage du produit varie constamment dans sa forme puisqu'elle est, à un instant donné, l'intersection de la fenêtre 3a avec la section totale 2 de l'ouverture de la filière. L'enveloppe de cette section reste quant à elle constante et identique au contour de la fenêtre 3a.

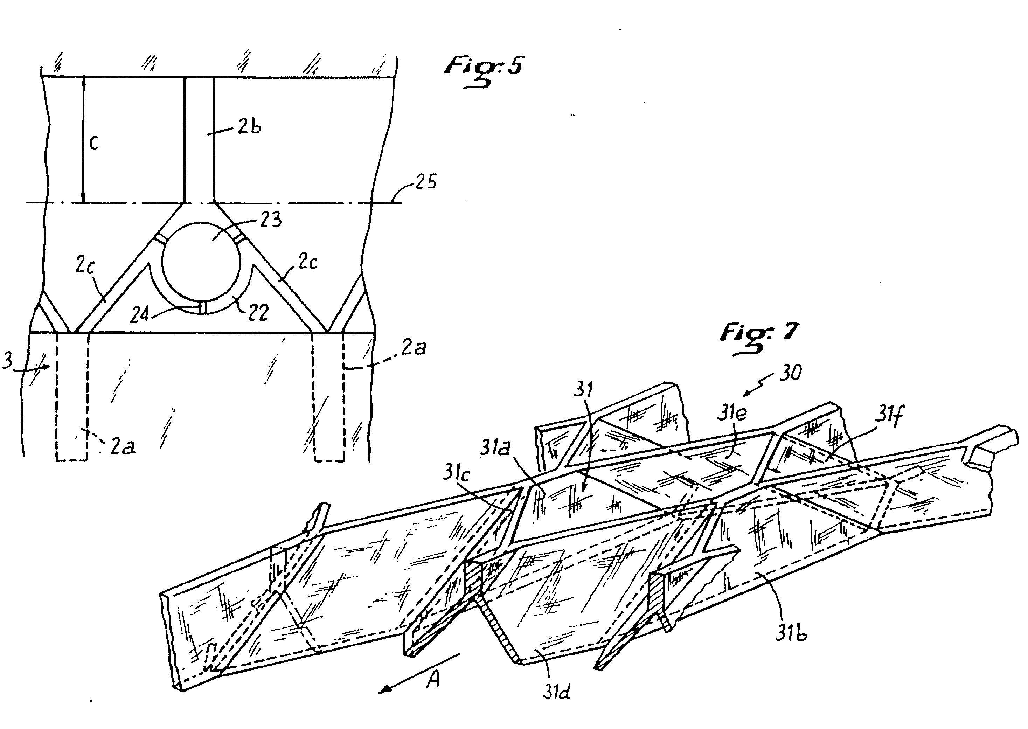

Le produit extrudé se présente donc sous la forme d'une plaque plane d'épaisseur l et de largeur L dans laquelle une pluralité de cloisons délimitent des alvéoles. Un exemple de ce produit est représenté à la figure 7 et sera décrit plus en detail ci-après.

Un autre exemple de ce produit P est représenté vu en plan, à la figure 1A, sans la tête d'extrusion qui, elle est vue de face. Ce produit, formé d'une succession d'alvéoles tetraédriques à base carrée, est obtenu par la filière 1 pourvue de l'ouverture en ligne brisée 2 et dans laquelle la vitesse de déplacement alternatif du masque 3 devant cette filière est supposée égale à la vitesse constante de sortie du produit, ce qui est tout à fait théorique car ne serait-ce qu'au point de rebroussement du déplacement du masque, la vitesse du masque ne peut conserver une valeur absolue constante. La plage de balayage de la fenêtre est représentée entre les deux lignes en trait mixte $b_1$ et $b_2$. La direction d'extrusion est, sur le produit P représentée par la flèche E. Il est nécessaire que la direction d'extrusion soit parallèle à une droite.

La forme des alvéoles résultera, outre du dessin initial de la section 2, de la plage de cette section balayée par la fenêtre 3a lors de son déplacement de la vitesse de déplacement qui peut être variable durant un cycle (un aller et retour) de balayage et/ou variable d'un cycle à l'autre avec même des arrêts entre chaque cycle ou chaque demi-course. On a représenté sur ces figures une fenêtre rectangulaire mais l'invention vise également toute forme de fenêtre, permettant l'extrusion d'un produit de section quelconque. A titre d'exemple, on mentionnera l'intérêt qu'il peut y avoir a prévoir une fenêtre en forme de secteur annulaire, permettant d'extruder une paroi se présentant comme une section partielle de cylindre destinée à former des panneaux préformés comme notamment des pavillons de véhicule automobile. La fenêtre peut présenter une forme de cornière, en L, en V, en Ω... tout profilé réalisable par extrusion, les mouvements du masque étant adaptés à cette forme (par exemple le long de la bissectrice de l'angle pour une cornière). On notera qu'il peut y avoir un intérêt à disposer d'une filière standard présentant un réseau de fentes sur une surface totale telle qu'elle peut être balayée par des masques de forme de fenêtres différentes. On parvient ainsi à un outillage extrêmement bon marché.

On notera que les alvéoles susdits sont ouverts sur la face supérieure et la face inférieure de la paroi. Ils peuvent donc être parcourus par un fluide dans le sens de l'épaisseur de la plaque, ce qui est très avantageux pour obtenir un bon refroidissement du produit après extrusion et une homogénéité de ce refroidissement. Cependant, en jouant sur la longueur de la course du masque, on peut obtenir un produit étanche dont les alvéoles sont borgnes. Dans ce cas, le refroidissement restera aussi simple, par soufflage ou projection d'un fluide adéquat sur chacune des faces du produit.

La figure 1C est donnée pour illustrer schématiquement une réalisation du dispositif selon l'invention destiné à l'extrusion d'une paroi alvéolaire entièrement cylindrique en forme de tube. Le masque 3 possède ici une fenêtre annulaire 3b qui est déplacée excentriquement autour de l'axe 0 d'une filière 1 dont l'ouverture 2′ est une fente en forme de frise annulaire de même motif unitaire que celui de la figure 1B. On comprend bien que ce mouvement de balayage revient au mouvement alternatif du masque des figures 1A et 1B. Il suffit, pour s'en convaincre, d'observer le balayage d'un secteur limité de la filière. L'excentricité du mouvement sera définie en fonction de la largeur de la zone de filière à balayer. La réalisation d'un tel dispositif implique de lier les parties internes et externes du masque 3, notamment par le centre de la filière, le long d'un axe voisin de l'axe 0, filière qui sera à cet effet annulaire.

Le tube cylindrique obtenu peut bien entendu être de section circulaire, mais il peut également affecter toute forme fermée pour produire un cylindre de base quelconque. Le mouvement du masque sera également adapté à cette forme.

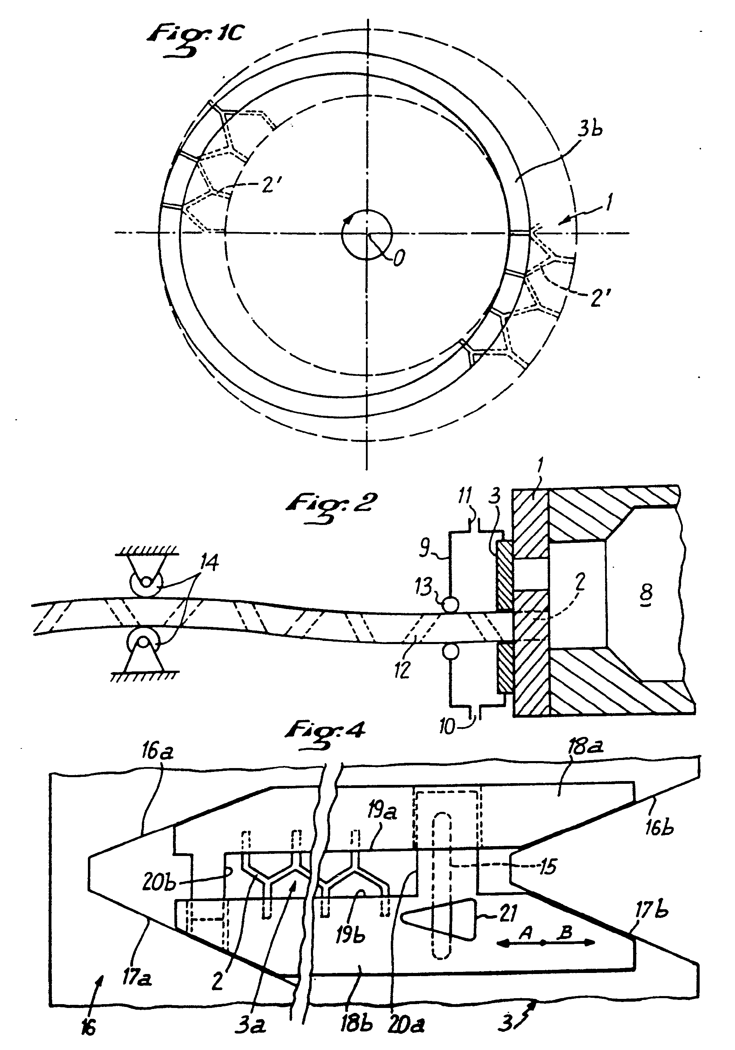

La figure 2 par un schéma, illustre en coupe le mode de réalisation du dispositif selon la figure 1B, dans lequel on retrouve la plaque 1 et le masque mobile 3. La chambre 8 de l'extrudeuse est remplie de matière à l'état pâteux qu'un dispositif connu en lui-même (vérin ou vis d'approvisionnement) force à s'écouler au travers de l'ouverture 2 de la filière 1. Une chambre de refroidissement 9 est disposée immédiatement adjacent au masque 3. De préférence, cette chambre 9 sera mobile avec le masque. Elle est remplie d'un liquide de refroidissement qui peut circuler entre une entrée 10 et une sortie 11 de la chambre. La plaque 12 du produit extrudé est extraite de la chambre 9 à l'état solide par des rouleaux de tirage 13 solidaires de cette dernière et est reprise en charge par des rouleaux fixes 14, suffisamment éloignés des rouleaux 13, pour que la plaque puisse encaisser par déformation élastique de flexion le débattement du masque 3 et de la chambre de refroidissement.

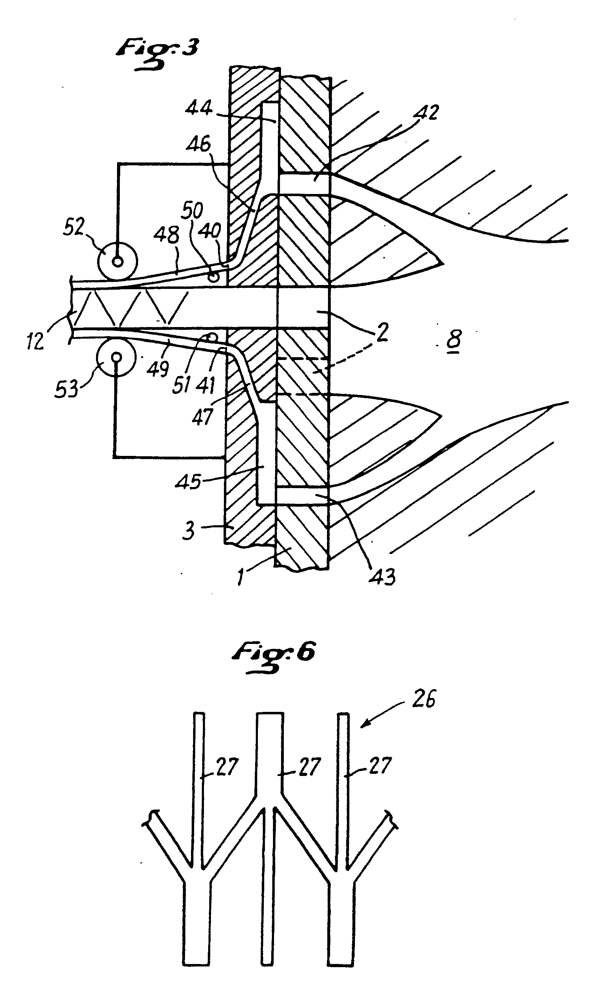

Il peut être utile de placer le produit ainsi extrudé entre deux plaques minces pour constituer un panneau du genre de ceux visés au préambule. Ces plaques peuvent être rapportées par collage ou par refusion des surfaces à mettre en contact. Elles peuvent également être coextrudées avec le produit au travers, soit d'une filière annexe, soit d'un dispositif semblable à celui représenté schématiquement à la figure 3.

Sur cette figure 3 on retrouve, avec les mêmes références, les éléments décrits précédemment. Le masque 3, comporte outre la fenêtre 3a deux fentes 40, 41 parallèles à la fenêtre 3a et situées de part et d'autre de cette dernière. Par ces fentes un produit plat en bande peut être extrudé de manière continue car la chambre intérieure 8 communique, au travers de la paroi 1 de filière, par des ouvertures 42, 43, avec des chambres 44, 45 ménagées dans le masque 3. La hauteur de ces chambres est telle que quelle que soit la position du masque 3, les ouvertures 42, 43 y débouchent respectivement sans pour autant venir en intersection avec l'ouverture principale 2 de la filière qui coopère avec la fenêtre 3a. Des conduits internes 46, 47 relient respectivement les chambres 44, 45 aux fentes 40, 41. Les fentes 40, 41 seront suffisamment éloignées de la fenêtre 3a pour qu'un espace puisse exister entre les bandes de produit extrudé 48, 49 et la structure alvéolaire 12, et qu'on puisse y loger des rampes 50, 51 de circulation d'un fluide de refroidissement provoquant un début de solidification. Les bandes 48 et 49 sont ensuite plaquées, à l'état encore pâteux de chaque côté de la structure 12 par des rouleaux 52, 53 solidaires du masque 3. On n'a pas représenté sur cette figure les moyens mis en oeuvre pour parvenir au durcissement final du produit en aval des rouleaux 52, 53.

Les bandes 48, 49 peuvent être dans un produit différent de celui de l'âme 12. Dans ce cas les orifices 42, 43 seront reliés à une chambre différente de l'extrudeuse accueillant cet autre produit.

Il peut également être avantageux de prévoir, au-delà des rouleaux de tirage 14 une table fixe sur laquelle le produit glisserait par sa face inférieure alors qu'au dessus du produit il est disposé une tête de remplissage des alvéoles, avec un produit de remplissage expansible. A la suite de cette tête le dispositif peut comporter en regard de la table, une table supérieure fixe qui avec la première forme un tunnel, chauffant ou non, de contention de l'expansion du produit en cours de mise en forme. On obtiendrait ainsi de manière automatique une plaque de produit alvéolaire rigide remplie d'un matériau de garniture, pour isolation phonique et thermique, ou étanchéité.

Afin de disposer d'un dispositif simple, ne nécessitant pas de mettre en oeuvre des asservissements complexes pour le réglage instantané du débit de l'extrudeuse, il est judicieux de prévoir une section 2 de passage du produit extrudé au travers de la paroi 1 dont la surface découverte par la fenêtre 3a du masque 3 reste constante quelle que soit la position de cette fenêtre par rapport à la paroi. Ainsi pour une section 2 semblable à celle représentée a la figure 1, et pour une fenêtre de hauteur $l$ égale à la hauteur de chacune des parties inférieure, centrale et supérieure de la section 2, il faut que la section de chaque fente 2c soit égale à la moitié de celle de chaque fente 2a ou 2b, le nombre des fentes 2a étant en outre égal au nombre des fentes 2b et à la moitié du nombre des fentes 2c, lorsqu'elles sont comptées découvertes par la fenêtre, et que chacune de ces parties ait une loi identique de variation de leur section en fonction de leur hauteur.

Au cas où le dessin de la section 2 ne permettrait pas d'avoir cette relation, on peut prévoir, dans la filière et dans le masque, des orifices disposés en regard l'un de l'autre, et un volet d'occultation de l'orifice du masque asservi à sa position par rapport à la section 2 de manière à assurer un débit de trop plein qui, variable, viendrait compenser les variations de débit au travers de la fenêtre 3a. L'orifice prévu dans la paroi 1 de filière serait suffisamment allongé, comme celui 15 de la figure 4 pour que la chambre 8 soit toujours en communication avec l'orifice prévu dans le masque.

Sur la figure 4 on a schématisé une variante de réalisation du dispositif selon l'invention dans laquelle le masque 3 possède des moyens pour réaliser un réglage de la hauteur l de la fenêtre et, par suite, pour permettre la fabrication de parois alvéolaires d'épaisseurs fixes différentes ou d'une paroi alvéolaire d'épaisseur variable, ce avec un même outillage.

Le masque mobile 3 est, pour ce faire, constitué de plusieurs parties, à savoir une partie 16 de support comportant deux guides parallèles supérieurs 16a et 16b et deux guides parallèles inférieurs 17a et 17b convergents les uns 16a et 16b vers les autres 17a et 17b, de manière symétrique par rapport à une horizontale. Ces guides reçoivent à coulissement une pièce en deux parties 18a, 18b pouvant coulisser verticalement l'une par rapport à l'autre et dont les bords en regard 19a et 19b constituent les bords parallèles longitudinaux de la fenêtre du masque. Les bords transversaux 20a et 20b de cette fenêtre sont constitués par des extensions des parties 18a et 18b susdites coopérant avec l'une partie notamment au guidage de leur mouvement relatif d'éloignement ou de rapprochement. Cette représentation schématique montre bien que si l'on déplace les pièces 18a et 18b dans le sens A, celles-ci se rapprochent et la largeur de la fenêtre diminue. On augmente cette largeur par le déplacement inverse B. L'orifice 15, ménagé dans la paroi de filière, au même titre que la section 2, est occulté par les pièces 18a et 18b sur toute sa longueur, quelle que soit la position, dans sa course, du masque, à l'exception d'une zone qui correspond à l'intersection de cet orifice 15 avec une ouverture 21 ménagée dans la partie 18b. Cette ouverture est de forme telle (ici sensiblement triangulaire) que la zone de l'orifice 15 qu'elle laisse découverte est de surface variable selon l'endroit où se trouvent les parties 18a et 18b par rapport aux guides 16a, 16b, 17a, 17b. Ainsi on voit qu'il est possible de compenser la diminution du débit de produit extrudé entre les bords 19a et 19b par suite de leur rapprochement car, ce rapprochement résultant d'un déplacement selon la flèche A des parties 18a et 18b, a entraîné l'augmentation de la surface de l'orifice 15 découverte par l'ouverture 21. Il suffit de déterminer correctement la forme de l'ouverture 21, en fonction de la largeur de l'orifice 15 et de la forme de la section 2, pour que la somme des débits de produit s'écoulant au travers de la fenêtre et de l'orifice 21 reste constante et que les variations de débit au travers de la fenêtre soient compensées par des variations de débit inverses au travers de l'ouverture 21.

On peut, bien entendu, procéder à cette compensation par d'autres moyens comme par exemple l'asservissement de la vitesse, du rythme ou de la cadence des moyens, propres à l'extrudeuse, de propulsion du produit, à la valeur de la largeur de la fenêtre.

La figure 5 est un croquis qui montre au travers de la fenêtre 3a du masque 3 une portion particulière de la section d'extrusion 2. Celle-ci comporte une ouverture 22 annulaire communiquant avec les fentes 2c, la partie de paroi 23 interne à cette ouverture annulaire étant maintenue en place par tout moyen connu schématisé en 24 la reliant aux autres parties de la paroi comme expliqué précédemment. La fenêtre 3a est, sur cette figure, représentée en position haute et sa course maximale a pour valeur C, le trait mixte 25 illustrant la position prise par le bord supérieur de l'ouverture 3a en position basse. On voit dans ces conditions que la zone centrale de la section 2 d'extrusion, qui comporte l'ouverture annulaire 22, reste découverte en permanence. Il en résulte l'extrusion d'un tube qui ondule dans l'epaisseur de la plaque alvéolaire entre ses faces supérieure et inférieure. La plaque peut ainsi comporter plusieurs tubes la parcourant longitudinalement, ces tubes pouvant avantageusement constituer des conduits pour la circulation d'un gaz ou d'un fluide, notamment caloporteur.

On peut bien entendu extruder un élément allongé de section quelconque pleine ou creuse qui peut constituer armature pour la plaque alvéolaire.

On peut également, dans cette zone centrale toujours découverte, faire sortir une armature pleine ou creuse coulissant au travers de la paroi de filière à la même vitesse que celle d'extrusion du produit. Cette armature, d'un matériau différent de celui de la plaque, peut être souple ou rigide ou sous tension. Ainsi, souple il acceptera les ondulations susdites et une traction ultérieure conférera à la structure un aspect ondulé. En revanche, précontraint en traction, c'est la plaque qui se formera de manière ondulée autour de l'armature. On notera enfin que l'armature peut être constituée par un fil électrique.

La figure 6 montre partiellement une variante 26 particulièrement avantageuse de la section de filière 2. Ce dessin de la section de sortie du produit permet d'obtenir une structure alvéolaire dans laquelle les alvéoles sont ménagés entre des cloisonnements longitudinaux parallèles 27. Cette structure est bien adaptée pour des panneaux soumis à une compression ou à une flexion dans le sens longitudinal car les cloisonnements parallèles travaillent en compression pour leurs fibres inférieures et en traction pour leurs fibres extérieures à la manière des poutres d'une structure triangulée.

La figure 7 enfin représente en perspective une portion de plaque ou tube alvéolaire 30 obtenus par le dispositif selon l'invention, la filière d'extrusion étant semblable à celle représentée figures 1B ou 1C. On voit que chaque alvéole tel que 31 est délimité par six cloisons dont deux 31a et 31b sont longitudinales, parallèles entre elles et perpendiculaires aux surfaces inférieure et supérieure de la plaque. Ces surfaces sont également parallèles à la direction d'extrusion A. Les quatre autres cloisons 31c, 31d, et 31e, 31f sont quant à elles transversales avec une certaine inclinaison par rapport aux surfaces 31a, 31b, donc à la directon A et en outre inclinées par rapport à une perpendiculaire à l'épaisseur de la plaque ou du tube (dans ce cas une normale à la surface extérieure du tube). L'alvéole est ainsi polyédrique avec une grande base inférieure et une petite base supérieure, adjacent à deux alvéoles identiques sur une même ligne transversale du produit par ses cloisons 31a et 31b et adjacent à quatre alvéoles inversés par ses autres cloisons. La structure ainsi définie est très proche d'une structure en nid d'abeille connue et en possède toutes les caractéristiques. En plus, du fait des parois inclinées de chaque alvéole, la tenue de cette structure au cisaillement (déplacement relatif de la surface supérieure par rapport à la surface inférieure) est très nettement supérieure aux structures nid d'abeille connues. En effet, ces cloisons constituent de véritables arc-boutants s'opposant à ce déplacement et ce, dans toutes les directions, ce qui n'est pas le cas pour une structure alvéolaire présentant toutes ses cloisons perpendiculaires aux faces du panneau qu'elle garnit.

Il existe de nombreuses variantes de réalisation du dispositif d'extrusion selon l'invention. Sans les illustrer dans le détail on citera les suivantes :

Tout d'abord, dans des exemples décrits on a représenté le plan de coulissement du masque sur la filière perpendiculaire au sens de sortie du produit. On peut tout à fait incliner ce plan sur cette direction. Le résultat résidera alors dans une dissymétrie des alvéoles dans le sens de l'extrusion. Plus précisément, si le plan est incliné vers l'avant et vers le bas par rapport au sens d'extrusion, le produit tel qu'illustré par la figure 7 verra, pour chaque alvéole, les cloisons 31c et 31d proches de la verticale et de longueur courte tandis que les cloisons 31c et 31f seront très longues et très couchées. Le produit présentera alors une certaine anisotropie qui peut être intéressante pour certaines applications.

Une autre variante de réalisation consiste à prévoir le masque 3 en plusieurs parties mobiles par rapport à la filière indépendamment les unes des autres. Par exemple, pour illustrer une variante possible, le masque de la figure 1B pourrait être divisé en trois parties, une partie centrale fixe qui découvrirait de manière permanente les fentes 2c centrales, et deux parties mobiles de chaque côté de cette partie centrale. Les vitesses de ces parties d'extrémité pourraient être différentes l'une de l'autre si bien que l'on obtiendrait deux plaques alvéolaires d'un maillage différent réunies par une partie centrale fine pouvant former une charnière d'articulation longitudinale des deux plaques, ou une partie de liaison sécable ou facilement détachable.

Dans une autre variante de réalisation, qui concerne la fabrication d'une paroi tubulaire, on peut prévoir que le masque annulaire possède une fenêtre annulaire divisée par des secteurs de masque pleins. On produit, si le mouvement du masque n'est qu'un coulissement excentré, des parois en portion de cylindre dont les bords longitudinaux sont parallèles à l'axe d'extrusion. Le mouvement du masque peut comporter une rotation autour de son axe. Dans ce cas, les bords des portions de cylindre extrudées seront hélicoïdaux.

L'extrusion d'une paroi tubulaire peut être réalisée au travers d'un plan incliné par rapport à la direction d'extrusion.

Le produit qui en est issu comporte une géométrie d'alvéoles semblable à celle déjà mentionnée et comporte une section elliptique.

Par ailleurs, de même qu'il a été décrit en regard de la figure 3, pour une paroi plane, la possibilité de coextruder des plaques formant une peau, il est possible de coextruder des peaux tubulaires pour une paroi alvéolaire tubulaire. En particulier, pour recouvrir l'intérieur du tube, on peut prévoir l'extrusion d'une paraison à l'intérieur de la paroi alvéolaire qui y serait plaquée par soufflage.

On peut enfin noter qu'il est avantageux, dans une variante de réalisation de la figure 5, d'augmenter la course C du masque pour qu'il vienne en intersection avec le tube de section 22. On réalise ainsi une communication de ce tube avec chaque alvéole. Le produit obtenu est alors un produit dans lequel un écoulement de fluide (drainage) peut s'opérer par ces communications. Dans un sens transversal à la direction d'extrusion, les alvéoles restent non communicantes. Bien entendu, le mouvement relatif du masque et de la filière peut se traduire par une filière mobile derrière un masque fixe.

Le produit alvéolaire tridimensionnel de l'invention trouve de nombreuses applications. Il peut bien sûr être employé comme âme de panneaux, tubes ou parois, mais également comme caillebotis, en tant qu'armature diverse pour l'agriculture, pour la filtration, le drainage. Il peut constituer également le support de matériaux isolants thermiquement et phoniquement.

Il présente de nombreuses qualités pour son emploi dans l'industrie du bâtiment, l'industrie des transports, ou des applications beaucoup plus techniques, notamment lorsqu'il comporte des renforts, des tubulures ou qu'il est extrudé dans des matériaux nobles, ou des associations de matières à caractéristiques différentes (coextrusion).

A ce propos, l'invention n'est pas limitée à l'extrusion de matière plastique qu'elle soit thermoplastique ou thermodurcissable renforcée ou non. Elle peut convenir pour toute matière dont le durcissement peut intervenir rapidement sous l'effet d'un agent extérieur approprié (froid, rayonnement, chauffage...). Elle s'applique également aux alliages et notamment à certaines formes d'alliage thixotropique dont l'état pâteux peut être placé au voisinage du point de solidification.

Enfin, on mentionnera comme autre matériau l'argile, les compositions alimentaires telles que des pâtes ou des biscuits.

**Revendications**

1. Dispositif d'extrusion d'une paroi alvéolaire tridimensionnelle, comportant au moins un élément coulissant par rapport à un autre élément le long d'une surface plane sécante de la direction (A, E) de sortie du produit, selon un mouvement périodique, l'un des éléments étant constitué par une filière (1) pourvue d'une ouverture (2) de passage du produit, l'autre élément étant un masque (3) pourvu d'une fenêtre (3a) découvrant partiellement ladite ouverture (2) entre ses deux bords opposés les plus proches, caractérisé en ce que, pour l'extrusion d'une paroi alvéolaire dans laquelle chaque alvéole est de hauteur sensiblement perpendiculaire à la direction de sortie du produit (A, E), l'ouverture (2) de passage du produit comporte au moins une fente (2c) en forme de ligne brisée dont la largeur (e) définit l'épaisseur des cloisons limitant les alvéoles, l'écartement des bords les plus proches de la fenêtre (3a) définit la hauteur des alvéoles, et l'amplitude du mouvement périodique est au moins égale à la différence entre la distance séparant les bords de la fenêtre et la largeur de la ligne brisée mesurée entre ses sommets opposés.

2. Dispositif selon la revendication 1, caractérisé en ce que la fenêtre susdite (2) est sensiblement rectangulaire et le mouvement périodique relatif des éléments (1) (3) est un coulissement alternatif perpendiculaire aux grands côtés de la fenêtre (3a).

3. Dispositif selon la revendication 1, caractérisé en ce que la fenêtre (3b) susdite est annulaire, l'ouverture de passage (2) est en forme de frise annulaire, et le mouvement périodique relatif des éléments est un coulissement rotatif excentré autour de l'un des axes (0) de symétrie de l'ouverture (2') de la filière ou de la fenêtre annulaire.

4. Dispositif d'extrusion selon l'une quelconque des revendications précédentes caractérisé en ce que l'ouverture de sortie (2) comporte des segments de fente (2a, 2b), sensiblement parallèles, implantés à chacun des sommets de la fente (2c) en ligne brisée.

5. Dispositif selon l'une quelconque des revendications précédentes caractérisé en ce que, pour une fenêtre de dimensions données, la somme des sections de passage du produit inscrites dans les limites de la fenêtre est constante quelle que soit la position de la fenêtre au cours de son déplacement.

6. Dispositif selon l'une quelconque des revendications précédentes caractérisé en ce que la vitesse du mouvement périodique est réglable.

7. Dispositif selon la revendication 3 caractérisé en ce que le masque est en deux parties (18a, 18b) écartées l'une de l'autre d'une distance réglable pour délimiter entre elles ladite fenêtre (3a).

8. Dispositif selon la revendication 7, caractérisé en ce que la filière (1) comporte un orifice (15) de trop plein dont la section est plus ou moins occultée en fonction de la largeur de ladite fenêtre (3a).

9. Dispositif selon la revendication 8, caractérisé en ce que l'orifice (15) susdit est occulté par une partie du masque possédant à cet effet une ouverture (21) de section variable disposée en regard dudit orifice (15) pour maintenir constant le débit global d'extrusion.

10. Dispositif selon la revendication 2, caractérisé en ce qu'il comporte au moins un orifice de compensation de débit ménagé dans la filière, dont la section est variable avec une loi inverse de celle de variation de la somme des sections de passage du produit inscrites dans la fenêtre au cours du déplacement du masque de manière à conserver constant le débit de produit traversant la filière.

11. Dispositif selon la revendication 4, caractérisé en ce que la filière (1) comporte au moins un segment de fente (27) communiquant avec la fente en ligne brisée qui reste découvert par la fenêtre quelle que soit sa position dans le cycle alternatif de son mouvement.

12. Dispositif selon la revendication 2, caractérisé en ce qu'il comporte une filière secondaire dont l'orifice de sortie du produit est constitué par deux fentes (40, 41) parallèles entre elles ménagées dans le masque (3) et situées de part et d'autre de la fenêtre (3a) de ce dernier, associées chacune à un rouleau (52, 53) de placage à l'état pâteux de chacune des bandes issues des fentes sur les surfaces supérieure et inférieure de la paroi (12) alvéolaire susdite, lesdites fentes (40, 41) étant en communication permanente avec un orifice (42, 43) de passage du produit au travers de la filière.

13. Dispositif selon la revendication 1 caractérisé en ce qu'il comporte un dispositif fixe (14) d'évacuation de la paroi issue de la ou des filières, éloigné et en aval de ces dernières.

14. Dispositif selon la rvendication 1, caractérisé en ce qu'il comporte, en aval de la filière, une tête de remplissage des alvéoles avec un matériau de remplissage expansible et un tunnel de contention de l'expansion dudit matériau.

15. Paroi alvéolaire tridimensionnelle (30) produite par extrusion au travers d'une filière d'un produit pâteux et solidification au delà de la filière, dans laquelle chaque alvéole (31) est délimité par une pluralité de cloisons (31a à 31f) sensiblement transversales à l'épaisseur de la paroi, caractérisée en ce qu'elle comporte au moins quatre cloisons (31c, 31d, 31e et 31f) inclinées à la fois par rapport à une direction normale aux faces de la paroi et par rapport à la direction d'extrusion, pour former un tronc de pyramide.

16. Paroi alvéolaire selon la revendication 15 caractérisée en ce qu'elle comporte des éléments de structure continus s'étendant parallèlement à la direction d'extrusion dans l'épaisseur de la paroi.

17. Paroi alvéolaire selon la revendication 15 caractérisée en ce qu'elle est constituée par au moins deux matériaux de caractéristiques mécaniques différentes.

18. Paroi alvéolaire selon la revendication 15 caractérisée en ce qu'elle se présente sous la forme d'une plaque.

19. Paroi alvéolaire selon la revendication 15 caractérisée en ce qu'elle se présente sous la forme d'un tube.

## Ansprüche

1. Einrichtung zum Extrudieren eines dreidimensionalen Wandelementes mit einer Zellenstruktur, umfassend wenigstens ein Bauelement, welches gegenüber einem anderen Bauelement entlang einer Planfläche, welche die Austrittsrichtung (A, E) des Produktes schneidet, in einer periodischen Bewegung verschiebbar ist, wobei eines dieser Bauelemente durch ein Mundstück (1) mit einer Durchtrittsöffnung (2) für das Produkt gebildet ist und das andere Bauelement eine Maske (3) mit einem Fenster (3a) ist, welches die Durchtrittsöffnung (2) zwischen seinen einander gegenüberliegenden und den kleinsten Abstand aufweisenden Kanten teilweise freigibt, dadurch **gekennzeichnet,** daß zum Extrudieren eines Wandelementes mit Zellenstruktur, bei welcher jede Zelle eine Höhe hat, die im wesentlichen senkrecht zur Austrittsrichtung (A, E) des Produktes steht, die Durchtrittsöffnung für das Produkt wenigstens einen Spalt (2c) in Form einer geknickten Linie umfaßt, dessen Breite (e) die Dicke der die Zellen begrenzenden Trennwände bestimmt, wobei die den kleinsten Abstand aufweisenden Kanten des Fensters (3a) die Höhe der Zellen bestimmt und wobei die Amplitude der periodischen Bewegung wenigstens gleich der Differenz zwischen dem die Kanten des Fensters trennenden Abstand und der Breite der geknickten Linie, gemessen zwischen einander abgewandten Scheiteln, ist.

2. Einrichtung nach Anspruch 1, dadurch **gekennzeichnet,** daß das Fenster (3a) im wesentlichen rechtekkig ist und daß die periodische Relativbewegung der Bauteile (1, 3) eine zu den großen Kanten des Fensters (3a) senkrechte Hin- und Herbewegung ist.

3. Einrichtung nach Anspruch 1, dadurch **gekennzeichnet,** daß das Fenster (3b) kreisförmig ist, daß die Durchtrittsöffnung (2) die Form eines Ringfrieses hat und daß die periodische Relativbewegung der Bauteile eine exzentrische Drehverschiebung um die Symmetrieachse der Öffnung (2') des Mundstückes oder des ringförmigen Fensters ist.

4. Einrichtung zum Extrudieren nach einem der vorstehenden Ansprüche, dadurch **gekennzeichnet,** daß die Austrittsöffnung (2) Spaltsegmente (2a, 2b) aufweist, die im wesentlichen zueinander parallel sind und jeweils an einem der Scheitel des die Form einer geknickten Linie aufweisenden Spaltes ansetzen.

5. Einrichtung nach einem der vorstehenden Ansprüche, dadurch **gekennzeichnet,** daß für ein Fenster mit vorgegebenen Abmessungen die Summe der Durchtrittsquerschnittsflächen für das Produkt, welche innerhalb der Begrenzungen des Fensters liegen, konstant ist unabhängig von der Position dieses Fensters während seiner Verschiebebewegung.

6. Einrichtung nach einem der vorstehenden Ansprüche, dadurch **gekennzeichnet,** daß die Geschwindigkeit der periodischen Bewegung regelbar ist.

7. Einrichtung nach Anspruch 3, dadurch **gekennzeichnet,** daß die Maske aus zwei Teilen (18a, 18b) besteht, die gegeneinander um eine regelbare Distanz verstellbar sind und zwischen denen das Fenster (3a) gebildet wird.

8. Einrichtung nach Anspruch 7, dadurch **gekennzeichnet,** daß das Mundstück (1) eine Überlauföffnung hat, deren Querschnittsfläche in Abhängigkeit von der Breite des Fensters (3a) mehr oder weniger abgedeckt wird.

9. Einrichtung nach Anspruch 8, dadurch **gekennzeichnet,** daß die genannte Öffnung (15) durch einen Bereich der Maske abgedeckt ist, die zu diesem Zweck eine zu der genannten Öffnung (15) ausgerichtete Öffnung (21) mit variablem Querschnitt hat und die dazu dient, die Gesamtextrusionsmenge konstant zu halten.

10. Einrichtung nach Anspruch 2, dadurch **gekennzeichnet,** daß sie zumindest eine im Mundstück ausgebildete Liefermengen-Ausgleichsöffnung hat, deren Querschnitt entsprechend einem Gesetz variierbar ist, derart, daß er sich umgekehrt zur Veränderung der Summe der Durchtrittsquerschnittsflächen für das Produkt ändert, welche bei der Maskenbewegung jeweils innerhalb der Begrenzungen des Fensters liegen, so daß die durch das Mundstück hindurchtretende Produktliefermenge konstant bleibt.

11. Einrichtung nach Anspruch 4, dadurch **gekennzeichnet,** daß das Mundstück (1) wenigstens einen mit dem Spalt in Form einer geknickten Linie in Verbindung stehenden Spaltabschnitt (28) hat, welcher durch das Fenster freigelegt verbleibt unabhängig von der Position dieses Fensters während seiner Verschiebebewegung.

12. Einrichtung nach Anspruch 2, dadurch **gekennzeichnet,** daß sie ein Sekundärmundstück aufweist, dessen Austrittsöffnung für das Produkt durch zwei in der Maske (3) ausgebildete, zueinander parallele Spalte (40, 41) gebildet ist, die zu beiden Seiten des Fensteers (3a) der letzteren angeordnet sind, wobei diese Spalte jeweils einer Auflegerolle (52, 53) zum Auflegen der jeweiligen aus diesen Spalten austretenden Bänder in einem pastenartigen Zustand auf die Oberseite bzw. die Unterseite der genannten Wand (12) mit Zellenstruktur zugeordnet sind, und wobei die genannten Spalten (40, 41) ständig mit einer Öffnung (42, 43) für den Durchtritt des Produktes durch das Mundstück in Verbindung stehen.

13. Einrichtung nach Anspruch 1, dadurch **gekennzeichnet,** daß sie eine feststehende Einrichtung (14) zum Abziehen der aus dem Mundstück oder den Mundstücken austretenden Wand hat, die mit Abstand zu und stromab derselben angeordent ist.

14. Einrichtung nach Anspruch 1, dadurch **gekennzeichnet,** daß sie stromab des Mundstückes einen Füllkopf zum Füllen der Zellen mit einem expandierfähigen Füllmaterial hat sowie einen Tunnel zum Unterdrücken der Ausdehnung des genannten Materials.

15. Dreidimensionales Wandelement (30) mit einer Zellenstruktur, welches durch Extrusion eines pastenartigen Produktes durch ein Mundstück hindurch und Verfestigung jenseits des Mundstückes hergestellt ist, wobei jede Zelle (31) durch mehrere Trennwände (31a bis 31f) begrenzt wird, die im wesentlichen quer zur Dicke der Wand stehen, dadurch **gekennzeichnet,** daß sie wenigstens vier Trennwände (31c, 31d, 31e und 31f) umfaßt, die gleichzeitig gegenüber einer Normalenrichtung zu den Wandaußenflächen und gegenüber der Extrusionsrichtung geneigt sind und einen Pyramidenstumpf bilden.

16. Wandelement mit Zellenstruktur nach Anspruch 15, dadurch **gekennzeichnet,** daß es durchgehende Strukturelemente umfaßt, die sich parallel zur Extrusionsrichtung innerhalb der Wanddicke erstrecken.

17. Wandelement mit Zellenstruktur nach Anspruch 15, dadurch **gekennzeichnet,** daß es aus wenigstens zwei Materialien mit unterschiedlichen mechanischen Eigenschaften gebildet ist.

18. Wandelement mit Zellenstruktur nach Anspruch 15, dadurch **gekennzeichnet,** daß es die Form einer Platte hat.

19. Wandelement mit Zellenstruktur nach Anspruch 15, dadurch **gekennzeichnet,** daß es die Form eines Rohres hat.

## Claims

1. An extruder for extruding a three-dimensional cellular wall and including at least one element which, in operation, slide relative to another element in periodic motion, along a plane surface intersecting the exit direction (A, E) of the extruded substance, one of said elements being constituted by a die (1) provided with a substance-passing opening (2), the other element being a mask (3) provided with a window (3a) uncovering a portion of said opening (2) between the closest facing pair of window edges, characterized in that, for extruding a cellular wall in which each cell has its height substantially perpendicular to the exit direction (A, E) of the substance, the substance-passing opening (2) includes at least one slot (2c) in the form of a zig-zag line, the width ($e$) of which defining the thickness of the partition wall limiting the cells, the spacing of the closest edges of the window (3a) defines the height of the cells, and the stroke of the periodic motion is at least equal to the difference between the distance by which said closest facing edges are spaced apart and the width of the zig-zag line measured between the opposite vertices thereof.

2. An extruder according to claim 1, characterized in that said window (2) is substantially rectangular, and in that the periodic motion of the mask (3) is reciprocating sliding motion perpendicular to the long sides of the window (3a).

3. An extruder according to claim 1, characterized in that said window (3b) is annular, the substance-passing opening (2) being in the form of an annular frieze and the relative periodic motion of the elements is eccentric rotary sliding motion about one of the axis (0) of symmetry of the die substance-passing opening (Z') or of the annular window (3b).

4. An extruder according to anyone of the preceding claims, characterized in that said substance-passing opening (2) includes substantially parallel slot segments (2a, 2b), located at respective vertices of said zig-zag line slot (2c).

5. An extruder according to anyone of the preceding claims, characterized in that for a window of given dimensions, the sum of the substance-passing sections within the limits of the window is constant regardless of the position of the window during its motion.

6. An extruder according to claim 2, characterized in that the speed of periodic motion is adjustable.

7. An extruder according to claim 3, characterized in that the mask is made of two portions (18a, 18b) which are separated from each other by an adjustable distance in order to delimit said window (3a) therebetween.

8. An extruder according to claim 7, characterized in that the die (1) includes an overflow orifice (15) whose section is overlapped to a greater or lesser extent as a function of the width of said window (3a).

9. An extruder according to claim 8, characterized in that said orifice (15) is overlapped by a portion of the mask possessing an opening (21) for this purpose which is of varying section and is disposed opposite said orifice (15) in order to maintain the overall extrusion throughput at a constant value.

10. An extruder according to claim 2, characterized in that it includes at least one flow rate compensating orifice provided through the die, with the section of the orifice varying inversely to the variation in the sum of the substance-passing sections within the window as the mask is displaced, thereby maintaining constant substance throughput through the die.

11. An extruder according to claim 4, characterized in that the die (1) includes at least one slot segment (27) communicating with said zig-zag slot, and remaining uncovered within the window regardless of the position of the mask during its periodic motion.

12. An extruder according to claim 2, characterized in that it includes a secondary die whose substance-outlet orifice is constituted by two slots (40, 41) which are parallel to each other which are provided through the mask (3) and which are situated on either side of the window (3a) through the mask, said slots being associated with respective rolls (52, 53) for pressing the respective strips coming from said slots while still in the semisoft state against the top and bottom surfaces of the said cellular wall (12), said slots (40, 41) being in permanent communication with respective substance-passing orifices (42, 43) through the die (1).

13. An extruder according to claim 1, characterized in that it includes a fixed device (14) disposed at a distance from the, or each, die for removing the wall being extruded therethrough.

14. An extruder according to claim 1, characterized in that it includes a filler heat disposed downstream from the die for filling the cells with an expansible filler material, and a tunnel for containing the expansion of said material.

15. A three-dimensional cellular wall (30) produced by extruding a semisoft substance through a die and allowing it to harden beyond the die, wherein each cell (31) is delimited by a plurality of partitions (31a to 31f) extending substantially transversely to the thickness of the wall, the wall being characterized in that each cell includes at least four partitions (31c, 31d, 31e, and 31f) slope both relative to a direction normal to the faces of the wall and relative to the extrusion direction, in a frusto pyramidal shape.

16. A cellular wall according to claim 15, characterized in that it includes continuous structural elements extending parallel to the extrusion direction within the thickness of the wall.

17. A cellular wall according to claim 15, characterized in that it is constituted by at least two materials having different mechanical characteristics.

18. A cellular wall according to claim 15, characterized in that it is in the form of a plate.

19. A cellular wall according to claim 15, characterized in that it is in the form of a tube.

Fig. 1A

Fig. 1B

*Fig. 1C*

*Fig. 2*

*Fig. 4*

13

*Fig.3*

*Fig.6*

14

EP 0 263 850 B1

**Fig:5**

C

2b

25

23

2c          2c

24          22

3

2a

2a

2a

**Fig:7**

30

31

31e

31f

31a

31c

31b

A

31d